# EUROPÄISCHE PATENTANMELDUNG

(11) **EP 4 793 830 A1**
(43) Veröffentlichungstag der Anmeldung: **19.08.2026**
(21) Anmeldenummer: 25158622.8
(22) Anmeldetag: 18.02.2025
(51) Int. Cl.: G06N 3/045, G06N 3/048

(54) **VERFAHREN UND SYSTEM ZUM BETRIEB EINES TECHNISCHEN GERÄTS MIT EINER STEUERVORRICHTUNG**

(71) Anmelder: Siemens AG Österreich, 1210 Wien (AT)
(72) Erfinder: Rezapour Lakani, Safoura, 1210 Wien (AT); Schall, Daniel, 2020 Hollabrunn (AT); Sündermann, Axel, 1220 Wien (AT)
(74) Vertreter: Siemens Patent Attorneys

(57) **Zusammenfassung**

Computer-implementiertes Verfahren zum Betrieb eines technischen Geräts (TD1) mit einer Steuervorrichtung (C1), umfassend folgende Schritte:
a) Bereitstellen von Eingabe-Daten, welche zumindest eine Daten-Kennzeichnung aufweisen,
b) Bereitstellen eines Grund-Modells mit einer Architektur eines neuronalen Netzwerks, welches Blöcke umfasst, wobei die Blöcke über jeweilige Aktivierungsfunktionen identifizierbar sind, und einer Menge an vordefinierten Adaptern mit zumindest einer Adapter-Kennzeichnung in zumindest einem Speicher,
c) Auswählen eines jeweiligen Anwendungs-Adapters aus der Menge an vordefinierten Adaptern anhand der zumindest einen Daten-Kennzeichnung und der zumindest einen Adapter-Kennzeichnung, sowie jener Blöcke des Grund-Modells, welche über die Anwendung einer jeweiligen Aktivierungsfunktion identifiziert wurden,
d) Bestimmen von Ergebnis-Daten durch Anwenden der Daten und der zumindest einen Daten-Kennzeichnung auf das Grund-Modell und den jeweiligen Anwendungs-Adapter,
e) Bestimmen einer jeweiligen Verlustfunktion für den jeweiligen Adapter zwischen den Eingabe-Daten und den Ergebnis-Daten,
f) Prüfen, ob die Verlustfunktion innerhalb eines vorgegebenen Bereichs für einen Schwellwert liegt, und wenn ja, fortsetzen mit Schritt h),
g) Trainieren des jeweiligen Adapters mit zusätzlich bereitgestellten Trainings-Daten für den jeweiligen Adapter, und Fortsetzen bei Schritt d),
h) Erzeugen von Steuersignalen (CSIG) für die Steuervorrichtung (C1) zum Betrieb des technischen Geräts (TD1) auf Basis des Grund-Modells mit dem jeweiligen Anwendungs-Adapter, und Betreiben des technischen Geräts (TD1) mit den Steuersignalen (CSIG) durch die Steuervorrichtung (C1).

## Beschreibung

Die Erfindung betrifft ein computer-implementiertes Verfahren und ein System zum Betrieb eines technischen Geräts mit einer Steuervorrichtung.

Die Erfindung betrifft ferner ein Computer-Programm-Produkt.

Im Kontext von industriellen Basis- oder Grund-Modellen (engl. "industrial foundation models", kurz IFM) ist ein Adapter eine Technik, die verwendet wird, um ein vortrainiertes Modell aus dem Bereich der künstlichen Intelligenz (kurz KI) anzupassen oder zu optimieren, um bestimmte Aufgaben auszuführen oder Domänen zu bedienen, ohne das gesamte Modell umfassend neu zu trainieren.

Anstatt die gesamte Architektur des vortrainierten Modells zu ändern, fügen Adapter aufgaben- oder domänenspezifische Parameter und Ebenen hinzu, während die ursprünglichen Parameter unverändert bleiben.

Diese zusätzlichen Komponenten ermöglichen es dem Modell, aufgabenspezifische Merkmale zu erlernen oder sich an domänenspezifische Nuancen anzupassen, ohne das Wissen zu vergessen, das in den vortrainierten Parametern kodiert ist.

Adaptern bestehen aus weitaus weniger Parametern als das ursprüngliche Modell und können auf parametereffiziente Weise feinabgestimmt werden, indem die Gewichte der Adapter angepasst und die restlichen Gewichte des Modells eingefroren werden.

Mit anderen Worten werden Adapter definiert, um ein für verschiedene Zwecke multifunktionales Modell einzusetzen, und mithilfe feinjustierter zweckgebundener Adapter das IFM zu präzisieren und das lokale Modell somit effizienter zu machen.

Die Bedeutung von künstlicher Intelligenz (kurz Kl) in Industriequalität liegt in ihrer Zuverlässigkeit und Vertrauenswürdigkeit, insbesondere in kritischen Sektoren, in denen Fehler schwerwiegende Folgen haben können.

Adapter tragen zu dieser Zuverlässigkeit bei, indem sie die Anpassung von Modellen mit minimaler Unterbrechung ihrer ursprünglichen Fähigkeiten ermöglichen, wodurch das Risiko unbeabsichtigter Verzerrungen oder Fehler bei der Feinabstimmung verringert wird.

Darüber hinaus ermöglichen Adapter eine effiziente Modellbereitstellung und -wartung, da sie im Vergleich zum erneuten Training des gesamten Modells von Grund auf weniger Rechenressourcen und Trainingsdaten benötigen.

Mehrere Adapter können kombiniert werden, um einen einzigen Multitasking-Adapter zu erhalten.

Beispielsweise können, ausgehend von einem IFM, welches über mehrere verschiedenen Anwendungs-Domänen gültig ist, Adapter angewendet werden, um eine Anpassung des IFM auf eine ausgewählte Domäne durchzuführen, und so ein Domänen-IFM zu erzeugen.

Ein Kunde kann das IFM oder auch das angepasste Domänen-IFM mithilfe von weiteren Adaptern, welche das Wissen des Kunden berücksichtigt, weiter verfeinert und angepasst werden, um so ein spezifisches Kunden-IFM zu erzeugen.

Adapter können sich gegenseitig in die Lernprozesse eingreifen, insbesondere wenn sie gemeinsame Parameter oder Schichten haben.

Diese Interferenz kann zu einer suboptimalen Leistung oder Schwierigkeiten bei der Optimierung des Gesamtmodells führen, da Änderungen an einem Adapter versehentlich das Verhalten anderer Adapter beeinflussen können.

Insbesondere können "Vision Foundation"-Modelle (auch bekannt als "Large Vision Models", kurz "LVMs") verschiedene Anwendungsfälle in industriellen Bereichen lösen, wie beispielsweise für eine Anomalie-Erkennung, eine Anomalie-Lokalisierung, etc.

"Prompt"-basierte LVMs, also solche großen Modelle, die auf Eingabe-Aufforderungen reagieren, können auch in industriellen Bereichen eingesetzt werden, in denen Bediener problemlos mit dem KI-System interagieren können.

Dabei müssen LVMs jedoch noch für neue nachgelagerte Aufgaben angepasst werden, häufig mit Aufgaben-spezifischen Randbedingungen, um mit einem kleineren Modell beispielsweise auf einer Edge-Vorrichtung effizient angewandt werden zu können.

LVMs sind große Modelle, häufig mit Millionen von Parametern und vielen Schichten, weshalb eine effiziente Feinabstimmung in der Praxis von großer Bedeutung ist.

Im Stand der Technik ist eine Adapter-basierte Feinabstimmung zur Reduktion der Modell-Größe bekannt.

Adapter sind zusätzliche "leichte" Schichten, die zwischen den Schichten eines LVM hinzugefügt werden, wobei für die Feinabstimmung nur Adapter für eine "Downstream"-Aufgabe trainiert werden, und das LVM selbst ändert sich nicht.

Da LVMs aus vielen Schichten bestehen, ist es nicht immer sinnvoll, Adapter zwischen den einzelnen Schichten zu injizieren.

Im Stand der Technik werden Adapter nur auf höhere Schichten injiziert.

Falls Merkmals-Einbettungen jedoch für eine nachgelagerte Aufgabe dabei nicht ausreichen, kann dies nicht zureichend abgedeckt werden.

Im Stand der Technik ist ferner eine sogenannte "Low-Rank"-Adaptierung von LVMs (kurz "LoRA") bekannt, welche trainierbare Rangzerlegungsmatrizen in jede Schicht eines Modells injiziert, um die Anzahl der trainierbaren Parameter für nachgelagerte Aufgaben zu reduzieren.

Es ist dabei jedoch nicht möglich zu bestimmen, welche Schichten fein abgestimmt werden sollten.

Im Stand der Technik ist ferner ein MoE-Verfahren ("Mischung von Experten", kurz "MoE") bekannt, wobei ein Modell in Blöcke unterteilt wird, und es wird jeder Block durch einen Experten trainiert.

Dabei es gibt ein sogenanntes "Gating"-Netzwerk, um auszuwählen, welche Experten fein abgestimmt werden sollen.

Das MoE leidet jedoch unter unausgewogenen Daten und könnte voreingenommen sein, immer die gleichen Experten auszuwählen.

Außerdem kann die Auswahl der Experten beim MoE-Verfahren nicht spontan an neue nachgelagerte Aufgaben angepasst werden und ist daher unflexibel.

Im Stand der Technik ist außerdem eine genaue parametereffiziente Feinabstimmung durch robuste Adaption (kurz "RoSA") bekannt, wobei eine parametereffiziente Feinabstimmung durchgeführt wird, indem eine Hauptkomponenten-Analyse angewendet wird und eine Reihe von Aufgaben während des Trainings berücksichtigt wird, um die wichtigsten Parameter für die Feinabstimmung einer nachgelagerten Aufgabe zu identifizieren.

Dieser Ansatz ist nicht sehr anpassungsfähig und unflexibel für neuartige nachgelagerte Aufgaben, die während des Trainings noch nicht bekannt sind.

Trotz zahlreicher Methoden zur effizienten Adaption von LVMs gibt es derzeit keinen Ansatz, der automatisch festlegt, welche Parameter oder Schichten des LVM für einen bestimmten Anwendungsfall fein abgestimmt werden sollten.

Es ist daher Aufgabe der Erfindung eine Lösung bereitzustellen, bei welcher näher spezifiziert werden soll, welcher Teile eines Kl-Modells feiner abgestimmt werden sollen, um die Genauigkeit der abgefragten Lösung zu verbessern.

Die erfindungsgemäße Aufgabe wird durch ein computer-implementiertes Verfahren zum Betrieb eines technischen Geräts mit einer jeweiligen Steuervorrichtung gelöst, umfassend folgende Schritte:
a) Bereitstellen von Eingabe-Daten, welche zumindest eine Daten-Kennzeichnung aufweisen,
b) Bereitstellen eines Grund-Modells mit einer Architektur eines neuronalen Netzwerks, welches Blöcke umfasst, wobei die Blöcke über jeweilige Aktivierungsfunktionen identifizierbar sind, und einer Menge an vordefinierten Adaptern mit zumindest einer Adapter-Kennzeichnung in zumindest einem Speicher,
c) Auswählen eines jeweiligen Anwendungs-Adapters aus der Menge an vordefinierten Adaptern anhand der zumindest einen Daten-Kennzeichnung und der zumindest einen Adapter-Kennzeichnung, sowie jener Blöcke des Grund-Modells, welche über die Anwendung einer jeweiligen Aktivierungsfunktion identifiziert wurden,
d) Bestimmen von Ergebnis-Daten durch Anwenden der Daten und der zumindest einen Daten-Kennzeichnung auf das Grund-Modell und den jeweiligen Anwendungs-Adapter,
e) Bestimmen einer jeweiligen Verlustfunktion für den jeweiligen Adapter zwischen den Eingabe-Daten und den Ergebnis-Daten,
f) Prüfen, ob die Verlustfunktion innerhalb eines vorgegebenen Bereichs für einen Schwellwert liegt, und wenn ja, fortsetzen mit Schritt h),
g) Trainieren des jeweiligen Adapters mit zusätzlich bereitgestellten Trainings-Daten für den jeweiligen Adapter, und Fortsetzen bei Schritt d),
h) Erzeugen von Steuersignalen für die Steuervorrichtung zum Betrieb des technischen Geräts auf Basis des Grund-Modells mit dem jeweiligen Anwendungs-Adapter, und Betreiben des technischen Geräts mit den Steuersignalen durch die Steuervorrichtung.

Dadurch kann automatisch bestimmt werden, ausgehend von einem allgemeinen LVM, welche Schichten eines LVM für bestimmte industrielle Anwendungsfälle bevorzugt fein abgestimmt werden sollten, um die Modellgenauigkeit effizient zu verbessern.

Unter einer Daten-Kennzeichnung der Eingabe-Daten wird eine Markierung (engl. "label") der Daten verstanden, welche ein ausgewähltes Merkmal enthalten.

Nachfolgend wird ein solches Merkmal dafür eingesetzt, um einen entsprechenden Adapter auszuwählen.

Dazu weisen die Adapter eine oder mehrere Adapter-Kennzeichnungen auf, welche beispielsweise durch entsprechende Meta-Daten oder Markierungen gebildet sind, oder aus einem Vergleich des Adapters mit dem LVM abgeleitet werden können, beispielsweise aus der Zuordnung einzelner Adapter-Parameter zu den jeweiligen LVM-Parametern oder Schichten.

Es wird die Adapter-Kennzeichnung mit der Daten-Kennzeichnung verglichen, und bei einem vorgegebenen Mindestmaß an Übereinstimmung bei den Kennzeichnungen kann im Schritt c) der jeweilige Anwendungs-Adapter ausgewählt werden.

Beispielsweise kann eine Dekodierung durch entsprechende Eingabeaufforderungen von Masken zur Segmentierung erfolgen.

Es kann somit dynamisch eine effiziente Auswahl von Schichten für die Feinabstimmung des LVM erfolgen, ohne vorher festzulegen, welche Schichten fein abgestimmt werden sollten.

Dadurch ist eine einfache Anpassung an unterschiedliche nachgelagerte Aufgaben bei der Anwendung des LVM möglich.

Ferner kann eine Reduzierung des Rechen- und Ressourcenbedarfs erreicht werden, und die Feinabstimmung kann lokal erfolgen, wie beispielsweise an einer Edge-Vorrichtung oder einer Fog-Vorrichtung, ohne dass eine Cloud-Infrastruktur für die Reduktion beziehungsweise Anpassung des LVM erforderlich ist

Mit anderen Worten kann durch die Verwendung eines spezifischen Adapters für eine anwendungsspezifische Aufgabe beim Betrieb des technischen Geräts die Erzeugung eines kompakten und dennoch genauen Modells erreicht werden, welches effizient auf einer Geräte-Plattform mit deutlich geringeren Ressourcen für Software und Hardware im Vergleich zu einem Server verwendet werden kann.

Die spezifischen Adapter sind mit dem LVM kompatibel und bereits vortrainiert, und können dem Verfahren bereitgestellt werden.

Die Ressourcen der Geräte-Plattform zum Betreiben des technischen Geräts hinsichtlich Software und Hardware können beispielsweise die Rechenleistung und/oder die Speicherleistung und/oder die Kommunikationsleistung der Rechenvorrichtung betreffen.

Typischerweise weist eine Steuervorrichtung nur begrenzte Ressourcen zur Verarbeitung von Modellen auf, also einen wenig leitungsfähigen Prozessor und begrenzten Speicher, im Vergleich zu Ressourcen einer Workstation oder eines Servers für eine Cloud-Infrastruktur.

Das technische Gerät kann sehr unterschiedlich sein, beispielsweise eine Pumpe, eine elektronische Steuerung, wie ein Wechselrichter, ein elektronischer Sensor, wie ein Beschleunigungssensor oder ein bildgebender Sensor, wie eine Kamera, eine Produktionsmaschine, wie ein Montage-Roboter, ein Transport-Roboter für die Logistik, eine CNC-Fräsmaschine, usw.

Die Steuervorrichtung zu einem solchen technische Gerät kann eine analoge Elektronik-Schaltung sein, eine pneumatische Steuerung, oder eine Mikroprozessorschaltung mit digitalen Steueranschlüssen, welche wiederum Leistungselektronik-Komponenten zum Betreiben von Aktuatoren ansteuert.

Die Steuervorrichtung generiert Steuerinstruktionen oder Steuersignal zum Betrieb des verbundenen technischen Geräts, welche mithilfe eines Modells auf Basis künstlicher Intelligenz, nämlich des - aus einem bereitgestellten großen IFM/LVM - erzeugten Anwendungs-Modells.

Die Kriterien für die Ausführung des Modells und der Adapter auf einer Rechenvorrichtung, wie einer Edge-Vorrichtung, können Leistungs-Kriterien der Rechenvorrichtung sein, welche die Effizienz der Verarbeitung von Recheneigenschaften und/oder Speichereigenschaften und/oder Kommunikationseigenschaften der Rechenvorrichtung beschreiben, oder auch Leistungs-Kriterien für die Steuervorrichtung bei der Erzeugung und Ausführung von Steuersignalen zum Betrieb des technischen Geräts.

Aktivierungsfunktionen sind ein wesentlicher Baustein neuronaler Netze, der es ihnen ermöglicht, komplexe Muster in Daten zu lernen, und sie wandeln das Eingangssignal eines Knotens in einem neuronalen Netz in ein Ausgangssignal um, das dann an die nächste Schicht weitergegeben wird.

Ohne Aktivierungsfunktionen wären neuronale Netze darauf beschränkt, nur lineare Beziehungen zwischen Eingaben und Ausgaben zu modellieren.

Aktivierungsfunktionen führen Nichtlinearitäten ein und ermöglichen es neuronalen Netzen, hochkomplexe Zuordnungen zwischen Eingaben und Ausgaben zu lernen.

Aktivierungsfunktionen ermöglichen es somit neuronalen Netzen, diese nichtlinearen Beziehungen zu lernen, indem sie durch Aktivierungsfunktionen nichtlineare Verhaltensweisen einführen, was dazu führt, dass sich die Flexibilität und Leistungsfähigkeit neuronaler Netze bei der Modellierung komplexer und differenzierter Daten erheblich erhöht.

Als Aktivierungsfunktion kann beispielsweise eine sigmoidale Aktivierung, eine tanh- (hyperbolischer Tangens) Aktivierung, eine ReLU- (engl. "rectified linear unit") Aktivierung oder eine Softmax-Aktivierung gewählt werden.

Ein Modell kann mehrere Eingaben verarbeiten und entsprechend über seine Aktivierung reagieren, wobei Eingaben gewichtet an eine Ausgabefunktion übergeben werden, welche die Neuronen-Aktivierung, also die Aktivierung von Knoten im neuronalen Netzwerk, berechnet, meist unter Zuhilfenahme eines Schwellwerts.

Mit anderen Worten wird die Ausgabe des Neurons schließlich durch die Aktivierungsfunktion bestimmt, wobei die Aktivierung durch die Netzeingabe aus der Übertragungsfunktion sowie einem Schwellenwert beeinflusst wird.

Das Grund-Modell liegt als neuronales Netzwerk mit Blöcken vor, wobei die Blöcke eine Teilmenge an Knoten des Netzwerks beschreiben, beispielsweise als eine oder mehrere Lagen des Netzwerks, welche bei der Anwendung des Modells auf einen Eingabe-Datensatz eine vordefinierte Daten-Selektion durchführen.

Die Aktivierungen oder Aktivierungsfunktionen der Blöcke eines neuronalen Netzwerks beziehen sich auf die Werte, welche die einzelnen Einheiten (engl. "unit"), also Neuronen in diesen Blöcken erzeugen, nachdem sie ihre Aktivierungsfunktion auf die gewichtete Summe der Eingaben angewendet haben.

Beispielsweise können Blöcke bei einem LVM eine bestimmte Kategorie oder Klasse von Objekten in einem bereitgestellten Datensatz in Form eines Bildes mithilfe einer Bildanalyse identifizieren.

Ein neuronales Netzwerk weist in der Regel viele Lagen, wobei ein Block durch einige Lagen (engl. "layer") gebildet wird und dabei Teil des neuronalen Netzwerks ist.

Die Blöcke sind über jeweilige Modell-Parameter eindeutig identifizierbar, wobei die Blöcke und deren Aktivierung mithilfe der Aktivierungsfunktion für eine Anwendung bereitgestellt werden.

Blöcke können entsprechenden Adaptern zugeordnet werden, welche ebenfalls für eine Anwendung bereitgestellt werden.

Es können demnach Blöcke des Grund-Modells unter Anwendung eine jeweiligen Aktivierungsfunktion identifiziert werden, indem die entsprechende Verlustfunktion für den jeweiligen Block bestimmt wird.

Eine Verlustfunktion (engl. "loss function") ist eine spezielle Funktion in der mathematischen Statistik und Teil eines statistischen Entscheidungsproblems, welche jeder Entscheidung in Form einer Punktschätzung, einer Bereichsschätzung oder eines Tests den Schaden zuordnet, der durch eine vom wahren Parameter abweichende Entscheidung entsteht.

Gemeinsam mit der Entscheidungsfunktion kann die Verlustfunktion zusätzlich zu einer Risikofunktion kombiniert werden, welche den potentiellen Schaden bei Verwendung einer Entscheidungsfunktion angibt.

In der Informationstheorie kann unter der Entropie die durchschnittliche Anzahl von Entscheidungen bezeichnet werden, welche benötigt werden, um ein Zeichen aus einer Zeichenmenge zu identifizieren oder zu isolieren.

Anders gesagt kann die Entropie als Maß verstanden werden, welches für eine Nachrichtenquelle den mittleren Informationsgehalt ausgegebener Nachrichten angibt.

Die Verlustfunktion misst demnach, wie gut ein neuronales Netzmodell eine bestimmte Aufgabe erfüllt, in den meisten Fällen eine Regression oder Klassifizierung.

Für Regressionsaufgaben, wenn das Netz kontinuierliche Zahlen vorhersagen soll, wird bevorzugt die Verlustfunktion des mittleren quadratischen Fehlers verwendet (engl. "mean square error", kurz MSE).

Die Verlustfunktion des mittleren absoluten Fehlers (engl. "mean absolute percentage error", kurz MAPE) wird bevorzugt bei der Bedarfsprognose verwendet.

Die "Cross-Entropy"-Verlustfunktion wird bevorzugt bei Klassifizierungsaufgaben verwendet, wenn das neuronale Netz Wahrscheinlichkeiten vorhersagen soll.

Die "Cross-Entropy"-Verlustfunktion kann verwendet werden, um die optimale Lösung zu finden, indem die Gewichte eines maschinellen Lernmodells während des Trainings angepasst werden, um den Fehler zwischen dem tatsächlichen und dem vorhergesagten Ergebnis zu minimieren.

Im erfindungsgemäßen Zusammenhang kann die Verlustfunktion beispielsweise mithilfe der Entropie quantifiziert werden, wobei für die ausgewählten Adapter die mittlere Entropie bestimmt wird.

Mit anderen Worten wird die Verlustfunktion als Entropie von Aktivierung für jeweilige Blöcke berechnet, und mit diesem Verlust an Entropie können jene Blöcke gefunden werden, deren Adapter trainiert werden sollen, um erfindungsgemäß die Modellgenauigkeit effizient zu verbessern.

In einer Weiterbildung der Erfindung ist es vorgesehen, dass die Daten Bilddaten sind, und die auszuführenden Aufgaben Bildanalyse-Aufgaben sind, insbesondere für eine visuelle Qualitäts-Inspektion zur Anwendung bei einem hergestellten Produkt.

Dadurch wird erreicht, dass besonders große Modelle, welche Bild-Daten beispielsweise eines Kamera-Sensors umfassen, auf der Steuervorrichtung effizient verarbeitet werden können.

Dies ist insbesondere für eine visuelle Qualitäts-Inspektion zur Anwendung bei einem, von einer Produktionsmaschine hergestellten/ zusammengebauten Produkt oder einem von einer Bearbeitungsmaschine bearbeiteten Produkt vorteilhaft.

Die Anwendung eines jeweiligen spezifischen Modells ist besonders günstig, wenn beispielsweise mehrere Produktions- oder Bearbeitungsmaschinen innerhalb eines Klienten-Server-System betrieben werden, diese aber unterschiedliche Produkte herstellen und daher unterschiedliche Kl-Modelle für die jeweiligen Herstellungs-/ Bearbeitungsprozesse der jeweiligen Produkte anwenden.

Analog dazu können beispielsweise auch technische Geräte wie Pumpen oder Motoren unterschiedlich von jeweiligen Klienten mit unterschiedlichen Kl-Modellen performant betrieben werden.

In einer Weiterbildung der Erfindung ist es vorgesehen, dass die Daten Betriebsdaten vom Betrieb des technischen Geräts sind, und die auszuführenden Aufgaben Betriebsanalyse-Aufgaben sind.

Die genannten Vorteile sind auch für den Betrieb von technischen Geräten anwendbar, die durch ein genaues und effizientes Modell, in diesem Fall ein durch einen oder mehrere entsprechende Adapter feinjustiertes IFM betrieben werden sollen.

Dadurch wird erreicht, dass besonders große Modelle, welche Betriebs-Daten beispielsweise von Sensoren, wie beispielsweise Beschleunigungssensoren, welche den Betrieb eines Motors überwachen, umfassen, auf einer Steuervorrichtung effizient verarbeitet werden können.

In einer Weiterbildung der Erfindung ist es vorgesehen, dass die Steuersignale Steuerinstruktionen zur Ausführung durch einen Prozessor vorgesehen sind.

Dadurch kann ein LVM/IFM direkt auf einer Rechenvorrichtung angewandt und betrieben werden.

In einer Weiterbildung der Erfindung ist es vorgesehen, dass die Steuervorrichtung von einem Klienten eines Klienten-Server-Systems umfasst ist, und vorzugsweise eine Edge-Vorrichtung ist.

Dadurch wird erreicht, dass das Anwendungs-Modell auf effiziente Weise auf einer Steuervorrichtung eines Klienten-Server-Systems ausgeführt werden kann, und somit auf einfache Weise, ausgehend von einem zentralen LVM/IFM, jeweils ein reduziertes beziehungsweise komprimiertes Anwendungs-Modell auf mehrere Klienten verteilt werden kann, und darüber hinaus für jeden verbundenen Klienten ein individuelles/spezifisches und daher besonders genaues Anwendungs-Modell innerhalb des Systems erzeugt und für ein jeweiliges technisches Gerät angewendet werden kann.

In einer Weiterbildung der Erfindung ist es vorgesehen, dass die Schritte a) bis h) des Verfahrens durch den Server des Klienten-Server-Systems ausgeführt werden.

Dadurch kann durch die umfangreichen Ressourcen des Servers das Erzeugen der Ergebnisse und des Anwendungs-Modells auf effiziente Weise erreicht werden.

In einer Weiterbildung der Erfindung ist es vorgesehen, dass die Schritte a) bis h) des Verfahrens wiederholt werden, und der vorgegebene Bereich für einen Schwellwert der Verlustfunktion bei jeder Wiederholung neu vorgegeben wird.

Dadurch kann das Verfahren dynamisch nachjustiert werden.

In einer Weiterbildung der Erfindung ist es vorgesehen, dass der vorgegebene Bereich für einen Schwellwert der Verlustfunktion für die nachfolgende Wiederholung des Verfahrens anhand des vorhergehenden Werts des aktuellen Durchgangs des Verfahrens für die Verlustfunktion bestimmt wird.

Dadurch kann das Verfahren auf einfache Weise adaptiv nachjustiert werden und die Modell-Genauigkeit an aktuelle Anforderungen, beispielsweise hinsichtlich Modell-Genauigkeit, fortlaufend angepasst werden.

Die erfindungsgemäße Aufgabe wird durch ein System zum Betrieb eines technischen Geräts mit einem verbundenen Steuergerät gelöst, ferner umfassend einen Prozessor und einen Speicher, wobei das System dazu eingerichtet ist, das Verfahren nach einem der vorhergehenden Ansprüche auszuführen.

In einer Weiterbildung der Erfindung ist es vorgesehen, dass das System ein Klienten-Server-Systems ist, und die Steuervorrichtung von einem Klienten des Klienten-Server-Systems umfasst ist, und vorzugsweise eine Edge-Vorrichtung ist.

Die erfindungsgemäße Aufgabe wird durch ein Computer-Programm-Produkt gelöst, umfassend Befehle, die bei der Ausführung des Programms durch einen Computer diesen veranlassen, das Verfahren/die Schritte des Verfahrens nach einem der vorhergehenden Verfahrens-Ansprüche auszuführen

In den nachfolgenden Figuren ist die Erfindung anhand eines Ausführungsbeispiels näher beschrieben. In den Figuren zeigt
- Fig. 1: ein Ausführungsbeispiel für ein Klienten-Server-System, auf welchem das erfindungsgemäße Verfahren ausgeführt werden kann.
- Fig. 2: ein Ausführungsbeispiel für das erfindungsgemäße Verfahren als Fluss-Diagramm,

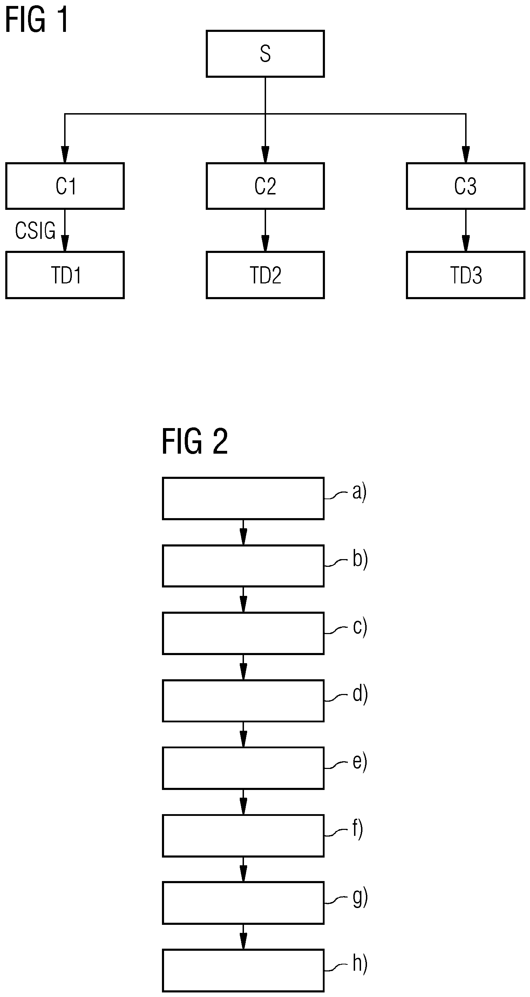

**Fig. 1** zeigt ein Ausführungsbeispiel für ein Klienten-Server-System, auf welchem das erfindungsgemäße Verfahren ausgeführt werden kann.

Das Klienten-Server-System weist einen Server S und Klienten C1-C3 auf, welche mit jeweiligen technischen Geräten TD1-TD3 verbunden sind, und über entsprechende jeweilige Steuerinstruktionen CSIG angesteuert werden.

Dementsprechend umfasst das Klienten-Server-System einen Prozessor und einen Speicher, um des erfindungsgemäßen Verfahrens auszuführen, wobei Teile des Verfahrens vorzugsweise auf dem leistungsfähigen Server S ausgeführt werden.

Die Steuervorrichtung kann dabei von einem jeweiligen Klienten C1-C3 des Klienten-Server-Systems umfasst sein, und ist vorzugsweise eine Edge-Vorrichtung, besonders bevorzugt eine Edge-Vorrichtung mit einer Rechenvorrichtung in Form eines ASIC- oder FPGA-Halbleiter-Bauteils.

**Fig. 2** stellt ein Ausführungsbeispiel für das erfindungsgemäße Verfahren als Fluss-Diagramm dar.

Das Verfahren zum Betrieb eines jeweiligen technischen Geräts TD1-TD3 mit einer jeweiligen Steuervorrichtung C1-C3 kann zumindest in einzelnen Schritten computer-implementiert sein.

Folgende Schritte sind dabei umfasst:
a) Bereitstellen von Eingabe-Daten, welche zumindest eine Daten-Kennzeichnung aufweisen,
b) Bereitstellen eines Grund-Modells mit einer Architektur eines neuronalen Netzwerks, welches Blöcke umfasst, wobei die Blöcke über jeweilige Aktivierungsfunktionen identifizierbar sind, und einer Menge an vordefinierten Adaptern mit zumindest einer Adapter-Kennzeichnung in zumindest einem Speicher,
c) Auswählen eines jeweiligen Anwendungs-Adapters aus der Menge an vordefinierten Adaptern anhand der zumindest einen Daten-Kennzeichnung und der zumindest einen Adapter-Kennzeichnung, sowie jener Blöcke des Grund-Modells, welche über die Anwendung einer jeweiligen Aktivierungsfunktion identifiziert wurden,
d) Bestimmen von Ergebnis-Daten durch Anwenden der Daten und der zumindest einen Daten-Kennzeichnung auf das Grund-Modell und den jeweiligen Anwendungs-Adapter,
e) Bestimmen einer jeweiligen Verlustfunktion für den jeweiligen Adapter zwischen den Eingabe-Daten und den Ergebnis-Daten,
f) Prüfen, ob die Verlustfunktion innerhalb eines vorgegebenen Bereichs für einen Schwellwert liegt, und wenn ja, fortsetzen mit Schritt h,
g) Trainieren des jeweiligen Adapters mit zusätzlich bereitgestellten Trainings-Daten für den jeweiligen Adapter, und Fortsetzen bei Schritt d,
h) Erzeugen von jeweiligen Steuersignalen CSIG für die jeweilige Steuervorrichtung C1-C3 zum Betrieb des jeweiligen technischen Geräts TD1-TD3 auf Basis des Grund-Modells mit dem jeweiligen Anwendungs-Adapter, und Betreiben des jeweiligen technischen Geräts TD1-TD3 mit den jeweiligen Steuersignalen CSIG durch die jeweilige Steuervorrichtung C1-C3.

Die Eingabe-Daten sind in diesem Beispiel Bilddaten, wie von einer visuellen Qualitäts-Inspektion für ein hergestelltes Produkt.

Die Eingabe-Daten können beispielsweise auch Betriebsdaten vom Betrieb des jeweiligen technischen Geräts TD1-TD3 sein.

Die Steuersignale sind Steuerinstruktionen zur Ausführung durch einen Prozessor.

Die Steuervorrichtung ist in diesem Beispiel von einem Klienten eines Klienten-Server-Systems umfasst, beispielsweise eine Edge-Vorrichtung.

Die Schritte a) bis h) des Verfahrens werden dementsprechend durch den Server des Klienten-Server-Systems ausgeführt.

*Unabhängig vom grammatikalischen Geschlecht eines bestimmten Begriffes sind Personen mit männlicher, weiblicher oder anderer Geschlechteridentität mit umfasst.*

### Bezugszeichenliste

- C1-C3: Klient
- CSIG: Steuersignal, Steuerinstruktionen
- S: Server
- TD1-TD3: technisches Gerät

## Patentansprüche

1. Computer-implementiertes Verfahren zum Betrieb eines technischen Geräts (TD1) mit einer Steuervorrichtung (C1), umfassend folgende Schritte:
a) Bereitstellen von Eingabe-Daten, welche zumindest eine Daten-Kennzeichnung aufweisen,
b) Bereitstellen eines Grund-Modells mit einer Architektur eines neuronalen Netzwerks, welches Blöcke umfasst, wobei die Blöcke über jeweilige Aktivierungsfunktionen identifizierbar sind, und einer Menge an vordefinierten Adaptern mit zumindest einer Adapter-Kennzeichnung in zumindest einem Speicher,
c) Auswählen eines jeweiligen Anwendungs-Adapters aus der Menge an vordefinierten Adaptern anhand der zumindest einen Daten-Kennzeichnung und der zumindest einen Adapter-Kennzeichnung, sowie jener Blöcke des Grund-Modells, welche über die Anwendung einer jeweiligen Aktivierungsfunktion identifiziert wurden,
d) Bestimmen von Ergebnis-Daten durch Anwenden der Daten und der zumindest einen Daten-Kennzeichnung auf das Grund-Modell und den jeweiligen Anwendungs-Adapter,
e) Bestimmen einer jeweiligen Verlustfunktion für den jeweiligen Adapter zwischen den Eingabe-Daten und den Ergebnis-Daten,
f) Prüfen, ob die Verlustfunktion innerhalb eines vorgegebenen Bereichs für einen Schwellwert liegt, und wenn ja, fortsetzen mit Schritt h),
g) Trainieren des jeweiligen Adapters mit zusätzlich bereitgestellten Trainings-Daten für den jeweiligen Adapter, und Fortsetzen bei Schritt d),
h) Erzeugen von Steuersignalen (CSIG) für die Steuervorrichtung (C1) zum Betrieb des technischen Geräts (TD1) auf Basis des Grund-Modells mit dem jeweiligen Anwendungs-Adapter, und Betreiben des technischen Geräts (TD1) mit den Steuersignalen (CSIG) durch die Steuervorrichtung (C1).

2. Verfahren nach dem vorhergehenden Anspruch, wobei die Daten Bilddaten sind, und die auszuführenden Aufgaben Bildanalyse-Aufgaben sind, insbesondere für eine visuelle Qualitäts-Inspektion zur Anwendung bei einem hergestellten Produkt.

3. Verfahren nach Anspruch 1, wobei die Daten Betriebsdaten vom Betrieb des technischen Geräts (TD1) sind, und die auszuführenden Aufgaben Betriebsanalyse-Aufgaben sind.

4. Verfahren nach einem der vorhergehenden Ansprüche, wobei die Steuersignale Steuerinstruktionen zur Ausführung durch einen Prozessor sind.

5. Verfahren nach einem der vorhergehenden Ansprüche, wobei die Steuervorrichtung von einem Klienten eines Klienten-Server-Systems umfasst ist, und vorzugsweise eine Edge-Vorrichtung ist.

6. Verfahren nach dem vorhergehenden Anspruch, wobei die Schritte a) bis h) des Verfahrens durch den Server des Klienten-Server-Systems ausgeführt werden.

7. Verfahren nach einem der vorhergehenden Ansprüche, wobei die Schritte a) bis h) des Verfahrens wiederholt werden, und der vorgegebene Bereich für einen Schwellwert der Verlustfunktion bei jeder Wiederholung neu vorgegeben wird.

8. Verfahren nach dem vorhergehenden Anspruch, wobei der vorgegebene Bereich für einen Schwellwert der Verlustfunktion für die nachfolgende Wiederholung des Verfahrens anhand des vorhergehenden Werts des aktuellen Durchgangs des Verfahrens für die Verlustfunktion bestimmt wird.

9. System zum Betrieb eines technischen Geräts mit einem verbundenen Steuergerät, ferner umfassend einen Prozessor und einen Speicher, wobei das System dazu eingerichtet ist, das Verfahren nach einem der vorhergehenden Ansprüche auszuführen.

10. System nach dem vorhergehenden Anspruch, wobei das System ein Klienten-Server-Systems ist, und die Steuervorrichtung von einem Klienten des Klienten-Server-Systems umfasst ist, und vorzugsweise eine Edge-Vorrichtung ist.

11. Computer-Programm-Produkt, umfassend Befehle, die bei der Ausführung des Programms durch einen Computer diesen veranlassen, das Verfahren/die Schritte des Verfahrens nach einem der vorhergehenden Verfahrens-Ansprüche auszuführen
